# EUROPÄISCHE PATENTSCHRIFT

(11) **EP 3 357 135 B1**
(45) Veröffentlichungstag und Bekanntmachung des Hinweises auf die Patenterteilung: **23.12.2020**
(21) Anmeldenummer: 16765984.6
(22) Anmeldetag: 14.09.2016
(51) Int. Cl.: H01T 1/24, H01T 4/12, H01T 21/00

(54) **ABLEITER UND VERFAHREN ZUR HERSTELLUNG EINES ABLEITERS**
ARRESTER AND METHOD FOR MANUFACTURING AN ARRESTER
PARAFOUDRE ET PROCÉDÉ DE FABRICATION D'UN PARAFOUDRE

(30) Priorität: 28.09.2015 DE 102015116332
(43) Veröffentlichungstag der Anmeldung: 08.08.2018
(73) Patentinhaber: TDK Electronics AG, 81671 München (DE)
(72) Erfinder: DÖLLGAST, Bernhard, 8530 Deutschlandsberg (AT)
(74) Vertreter: Epping - Hermann - Fischer
(86) Internationale Anmeldenummer: PCT/EP2016/071710
(87) Internationale Veröffentlichungsnummer: WO 2017/055088

(56) Entgegenhaltungen:
- WO-A1-2015/087394
- JP-A- H10 106 713
- JP-A- 2001 006 840
- JP-A- 2001 043 954
- JP-A- 2004 127 614
- US-A1- 2004 125 530
- US-A1- 2012 236 450

## Beschreibung

Es wird ein Ableiter zum Schutz vor Überspannungen angegeben. Insbesondere handelt es sich um einen Ableiter in Vielschichtbauweise. Weiterhin wird ein Verfahren zur Herstellung eines Ableiters angegeben.

Insbesondere handelt es sich bei dem Ableiter um einen Gasableiter, der einen gasgefüllten Hohlraum aufweist. Bei Überschreiten einer Grenzspannung kommt es im Inneren des Ableiters zu einem Lichtbogenüberschlag zwischen zwei Elektroden, wodurch eine Begrenzung der Spannung erzielt wird. Beispielsweise wird der Ableiter im Bereich der Telekommunikation eingesetzt.

Aus der US 6,721,157 B2, der US 8,503,147 B2, der US 8,514,536 B2 und der US 2007/0285866 A1 sind Ableiter, insbesondere Ableiter in Vielschichtbauweise bekannt. Auch die JP 2001 006840 A, JP 2004 127614 A und JP H10 106713 A beschreiben Ableiter in Vielschichtbauweise. Gemäß der JP 2001 006840 A sind Hilfselektroden auf derselben Schicht angeordnet wie funktionale Elektroden.

Es ist eine Aufgabe der vorliegenden Erfindung, einen verbesserten Ableiter und ein Verfahren zur Herstellung eines Ableiters anzugeben gemäß den unabhängigen Ansprüchen 1 und 11.

Gemäß einem ersten Aspekt der vorliegenden Erfindung wird ein Ableiter aufweisend mehrere übereinander angeordnete Schichten angegeben. Die Schichten sind elektrisch isolierend ausgebildet. Beispielsweise handelt es sich um keramische Schichten. Die Schichten sind vorzugsweise alle gemeinsam gesintert. Beispielsweise ist jede der Schichten aus ein oder mehreren Grünfolien hergestellt.

Der Ableiter weist einen Hohlraum auf, der durch mindestens zwei der Schichten hindurchführt. Der Hohlraum ist vorzugsweise vollständig nach außen hin abgeschlossen. Insbesondere weist der Ableiter wenigstens zwei Schichten auf, die den Hohlraum nach unten und oben begrenzen.

Zwischen den zwei Schichten, durch die der Hohlraum hindurchführt, sind Elektroden angeordnet, die an den Hohlraum angrenzen. Die Elektroden weisen Elektrodenenden auf, zwischen denen bei Auftreten einer Überspannung ein Lichtbogen ausgebildet wird. Auch die Elektrodenenden sind zwischen den zwei Schichten angeordnet, durch die der Hohlraum hindurchführt. Insbesondere verlaufen die Elektrodenenden parallel zur Ebene der Schichten. Vorzugsweise sind die Elektrodenenden vom Hohlraum aus gesehen als schmale Striche parallel zur Ebene der Schichten zu erkennen.

Eine derartige Anordnung der Elektroden erlaubt eine einfache und zuverlässige Herstellung des Ableiters. Insbesondere können die Elektroden bereits vor der Ausbildung des Hohlraums auf eine Schicht aufgetragen werden. Die Elektroden müssen somit nicht in einen bestehenden Hohlraum eingebracht werden, wodurch die Herstellung vereinfacht wird. Weiterhin kann die Form des Hohlraums bei einem unveränderten Herstellungsverfahren der Elektroden variiert werden. Dies ermöglicht eine flexible Anpassung der Form des Hohlraums und damit der Eigenschaften des Ableiters auf den jeweiligen Einsatzbereich hin. Weiterhin ermöglicht diese Konstruktion eine weitgehende Miniaturisierung des Ableiters bis hin zu den physikalischen Grenzen des Lichtbogens.

Beispielsweise werden die Elektroden als Elektrodenpaste auf eine Grünfolie aufgebracht. Zur Ausbildung des Hohlraums wird danach ein Loch in die Grünfolie eingebracht, wobei das Loch die Elektrodenpaste durchbricht, so dass zwei getrennte Elektroden gebildet werden. Nach dem Übereinanderstapeln aller Schichten wird der Schichtstapel gesintert.

Beispielsweise weisen die Elektroden Kupfer und/oder Wolfram auf. Die Elektroden können auch abschnittsweise unterschiedliche Materialien aufweisen. Beispielsweise weisen die Elektrodenenden Wolfram auf und ein vom Hohlraum entfernter Abschnitt der Elektroden ein anderes Material, z. B. Kupfer, auf. Wolfram ist aufgrund seiner hohen thermischen Stabilität besonders gut als Material für die Elektrodenenden geeignet, so dass eine hohe Dauerfestigkeit sichergestellt wird.

Beispielsweise weist der Ableiter eine untere Deckschicht und eine obere Deckschicht auf, die den Hohlraum nach unten und oben begrenzen. Die Elektroden sind vorzugsweise von der unteren Deckschicht und der oberen Deckschicht beabstandet. Auf diese Weise kann verhindert werden, dass bei einer Überspannung eine Entladung über die Deckschichten stattfindet.

Beispielsweise sind die Elektrodenenden auf halber Höhe des Hohlraums angeordnet. Somit sind die Elektrodenenden von der unteren Deckschicht und der oberen Deckschicht gleich weit entfernt.

In einer Ausführungsform sind die Elektroden des Ableiters als ein vom Hohlraum unterbrochener Streifen ausgebildet. Der Ableiter kann auch mehr als zwei Elektroden aufweisen.

In einer Ausführungsform weist der Ableiter vier Elektroden auf. Die vier Elektroden sind beispielsweise in Form eines vom Hohlraum durchbrochenen Kreuzes ausgebildet.

Beispielsweise sind alle Elektroden des Ableiters auf einer Schicht angeordnet. Alternativ können die Elektroden auch auf verschiedenen Schichten angeordnet sein. Die Elektroden sind vorzugsweise alle aus dem gleichen Material gebildet.

Die Form des Hohlraums ist vorzugsweise translationsinvariant bezüglich der Stapelrichtung der Schichten. In diesem Fall kann der Hohlraum auf einfache Weise durch Ausstanzen hergestellt werden. Insbesondere weist der Hohlraum die Form eines geraden Zylinders auf. In einer Ausführungsform ist die Grundfläche des Hohlraums rechteckig ausgebildet.

In einer weiteren Ausführungsform weist die Grundfläche sechs oder mehr Ecken auf. Beispielsweise ist die Grundfläche sechseckig oder achteckig ausgebildet.

Beispielsweise ist die Grundfläche derart geformt, dass der freie Weg zwischen den Elektrodenenden durch den gasgefüllten Hohlraum wesentlich kürzer ist als ein Weg entlang der Wände des Hohlraums. Dies ermöglicht die Ausbildung eines gut definierten Lichtbogens zwischen den Elektrodenenden.

Erfindungsgemäß weist der Ableiter wenigstens eine Hilfselektrode auf, die an den Hohlraum angrenzt. Die Hilfselektrode weist vorzugsweise ein anderes Material auf als die Elektroden. Beispielsweise weist die Hilfselektrode Graphit auf. Durch die Hilfselektrode kann die Ausbildung eines Lichtbogens zwischen den Elektrodenenden unterstützt werden. Die Hilfselektrode dient somit als Zündhilfe.

Die Hilfselektrode ist von den Elektroden beabstandet. Erfindungsgemäß ist die Hilfselektrode auf einer anderen Schicht angeordnet als die Elektroden. Beispielsweise ist die Hilfselektrode in Stapelrichtung gesehen höhenversetzt zur Elektrode angeordnet. In einer Ausführungsform sind wenigstens zwei Hilfselektroden vorgesehen. Beispielsweise sind die Hilfselektroden auf einer gemeinsamen Schicht angeordnet. In einer Ausführungsform sind die Hilfselektroden auf unterschiedlichen Schichten angeordnet.

Beispielsweise weist der Ableiter vier Hilfselektroden auf, wobei zwei Hilfselektroden auf einer Schicht angeordnet sind, die oberhalb der Elektroden-tragenden Schicht angeordnet ist und zwei Hilfselektroden auf einer Schicht angeordnet sind, die unterhalb der Elektroden-tragenden Schicht angeordnet ist.

Gemäß einem weiteren Aspekt der vorliegenden Erfindung wird ein Ableiter angegeben, der mehrere übereinander angeordnete Schichten aufweist, in denen ein Hohlraum ausgebildet ist, und Elektroden, die an den Hohlraum angrenzen. Die Elektroden sind abschnittsweise aus unterschiedlichen Materialien gebildet. Beispielsweise weisen die Elektrodenenden Wolfram auf und ein vom Hohlraum entfernter Abschnitt der Elektroden ein anderes Material, z. B. Kupfer, auf. Beispielsweise weist der Ableiter ein oder mehrere der funktionellen und/oder strukturellen Eigenschaften des oben beschriebenen Ableiters auf.

Gemäß einem weiteren Aspekt der vorliegenden Erfindung wird ein Ableiter angegeben, der mehrere übereinander angeordnete Schichten aufweist, in denen ein Hohlraum ausgebildet ist.

Der Ableiter weist Elektroden mit Elektrodenenden auf, wobei die Elektrodenenden an den Hohlraum angrenzen und sich vorzugsweise parallel zur Ebene der Schichten erstrecken. Der Hohlraum weist vorzugsweise eine nicht-rechteckige Grundfläche auf. Beispielsweise weist der Hohlraum eine Grundfläche in Form eines Sechsecks oder eines Achtecks auf. Vorzugsweise ist die Grundfläche derart ausgebildet, dass der freie Weg zwischen den Elektrodenenden durch den Hohlraum wesentlich kürzer ist als ein Weg entlang der Wände des Hohlraums. Dies ermöglicht die Ausbildung eines gut definierten Lichtbogens zwischen den Elektrodenenden. Beispielsweise weist der Ableiter ein oder mehrere der funktionellen und/oder strukturellen Eigenschaften des oben beschriebenen Ableiters auf.

Gemäß einem weiteren Aspekt der vorliegenden Erfindung wird ein Verfahren zur Herstellung eines Ableiters angegeben. Durch das Verfahren kann der oben beschriebene Ableiter hergestellt werden.

Dabei werden wenigstens eine erste Folie und wenigstens eine zweite Folie bereitgestellt. Es handelt sich vorzugsweise um Grünfolien, insbesondere keramische Grünfolien. Es können auch mehrere erste Folien und mehrere zweite Folien bereitgestellt werden. Aus den ein oder mehreren ersten Folien wird vorzugsweise die erste Schicht des Ableiters und aus den ein oder mehreren zweiten Folien die zweite Schicht des Ableiters gebildet.

Auf eine erste Folie wird ein leitfähiges Material zur Ausbildung von Elektroden aufgebracht. Das Material wird beispielsweise als ein durchgehender Streifen aufgebracht. Auf eine zweite Folie wird ein Material zur Ausbildung wenigstens einer Hilfselektrode aufgebracht. Danach wird ein Loch in die erste Folie und die zweite Folie eingebracht, wobei das Loch in der ersten Folie das leitfähige Material durchbricht. Die ersten und zweiten Folien werden vor oder nach dem Einbringen des Lochs übereinandergestapelt, so dass das leitfähige Material zwischen der ersten Folie und der zweiten Folie angeordnet ist. Das Material zur Ausbildung der Hilfselektrode ist von diesem leitfähigen Material beabstandet und auf einer anderen Folie angeordnet als das leitfähige Material zur Ausbildung der Elektroden.

Schließlich werden wenigstens eine untere Deckfolie und wenigstens eine obere Deckfolie bereitgestellt und es werden die ersten und zweiten Folien zwischen der unteren und oberen Deckfolie angeordnet. Anschließend kann der Folienstapel gesintert werden.

In der vorliegenden Offenbarung sind mehrere Aspekte einer Erfindung beschrieben. Alle Eigenschaften, die in Bezug auf die Ableiter und/oder das Verfahren offenbart sind, sind auch entsprechend in Bezug auf die jeweiligen anderen Aspekte offenbart und umgekehrt, auch wenn die jeweilige Eigenschaft nicht explizit im Kontext des jeweiligen Aspekts erwähnt wird.

Im Folgenden werden die hier beschriebenen Gegenstände anhand von schematischen und nicht maßstabsgetreuen Figuren näher erläutert.

Es zeigen:
- Figur 1A: eine nicht-anspruchsgemäße Ausführungsform eines Ableiters in einer Explosionsansicht,
- Figur 1B: eine Aufsicht auf einen Schnitt durch den Ableiter gemäß Figur 1A,
- Figur 2: eine anspruchsgemäße Ausführungsform eines Ableiters in einer Explosionsansicht,
- Figur 3: eine weitere anspruchsgemäße Ausführungsform eines Ableiters in einer Explosionsansicht,
- Figur 4: einen Teilaspekt einer Ausführungsform eines Ableiters in einer Explosionsansicht,
- Figur 5: einen weiteren Teilaspekt einer Ausführungsform eines Ableiters anhand einer perspektivischen Ansicht einer Schicht des Ableiters,
- Figuren 6A-6E: anspruchsgemäße Verfahrensschritte bei der Herstellung eines anspruchsgemäßen Ableiters.

Vorzugsweise verweisen in den folgenden Figuren gleiche Bezugszeichen auf funktionell oder strukturell entsprechende Teile der verschiedenen Ausführungsformen.

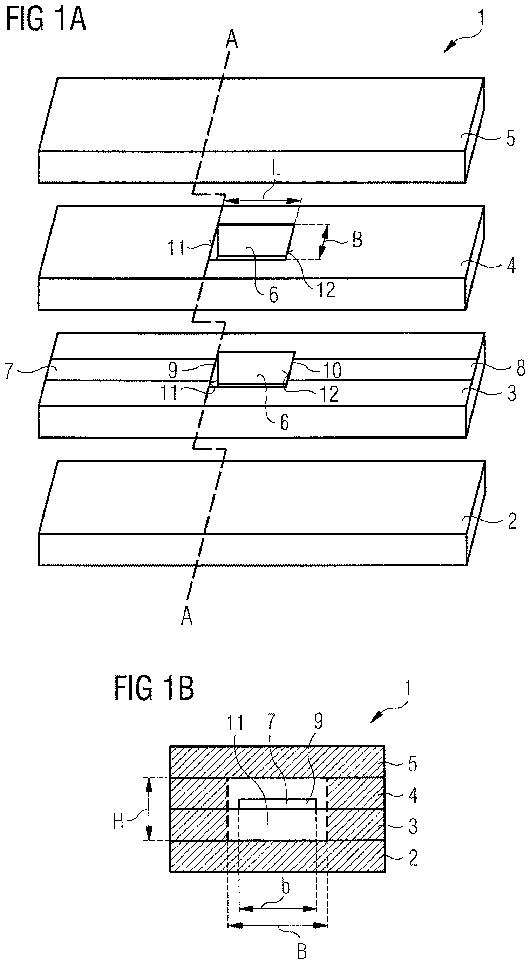

Figur 1A zeigt eine nicht-anspruchsgemäße Ausführungsform eines Ableiters 1 in einer Explosionsansicht.

Der Ableiter 1 weist eine Vielzahl von übereinander angeordneten Schichten 2, 3, 4, 5 auf und ist somit als Vielschichtbauelement ausgebildet. Die Schichten 2, 3, 4, 5 sind aus einem elektrisch isolierenden Material gebildet. Beispielsweise weisen die Schichten 2, 3, 4, 5 ein keramisches Material auf. Die Schichten 2, 3, 4, 5 sind vorzugsweise alle gemeinsam gesintert. Insbesondere ist der Ableiter 1 als monolithisches Bauelement ausgebildet.

Die Schichten 2, 3, 4, 5 können jeweils aus ein oder mehreren übereinander angeordneten Folien, insbesondere Grünfolien hergestellt sein. Beispielsweise sind ein oder mehrere der Schichten 2, 3, 4, 5 jeweils aus einer Vielzahl von Folien, beispielsweise jeweils aus 20 Folien gebildet. Die Schichten 2, 3, 4, 5 sind in diesem Fall jeweils als Folienpakete ausgebildet. Die Schichten 2, 3, 4, 5 können jedoch auch jeweils aus nur einer Folie gebildet sein. Die Anzahl der verwendeten Folien hängt von der Dicke der Folien und von den geforderten Eigenschaften des Ableiters 1 ab.

Der Ableiter 1 weist eine untere Deckschicht 2 und eine obere Deckschicht 5 auf, zwischen denen mittlere Schichten 3, 4 angeordnet sind. Beispielsweise ist die untere Deckschicht 2 die unterste Schicht des Ableiters 1 und die obere Deckschicht 5 die oberste Schicht des Ableiters 1.

Die mittleren Schichten 3, 4 weisen einen Hohlraum 6 auf. Insbesondere führt der Hohlraum 6 vollständig durch die mittleren Schichten 3, 4 hindurch. Der Hohlraum 6 wird nach unten durch die untere Deckschicht 2 und nach oben durch die obere Deckschicht 5 begrenzt. Insbesondere wird der Hohlraum 6 nach unten und oben durch das isolierende Material der Deckschichten 2, 5 begrenzt.

Die Form des Hohlraums 6 ist vorzugsweise translationsinvariant bezüglich der Stapelrichtung der Schichten 2, 3, 4, 5. Insbesondere weist der Hohlraum 6 die Form eines geraden Zylinders auf. Dabei verlaufen die den Hohlraum 6 begrenzenden Seitenwände senkrecht zur Grundfläche, insbesondere senkrecht zu einer den Hohlraum 6 begrenzenden Bodenfläche bzw. Deckfläche. Der Hohlraum 6 weist insbesondere eine Grundfläche parallel zu den Schichtebenen und eine Höhe entlang der Stapelrichtung der Schichten 2, 3, 4, 5 auf. In Figur 1A weist der Hohlraum 6 eine rechteckige Grundfläche mit einer Länge L und einer Breite B auf.

Der Hohlraum 6 ist mit einem Gas gefüllt. Die Art des Gases hängt insbesondere von einer Atmosphäre bei der Herstellung des Ableiters 1, insbesondere von einer Sinteratmosphäre beim Sintern der Schichten 2, 3, 4, 5, ab. Beispielsweise wird unter Ausschluss von Sauerstoff gesintert. Beispielsweise können der Atmosphäre auch Halogenide zugesetzt sein.

Auf der ersten mittleren Schicht 3 des Ableiters 1 sind zwei Elektroden 7, 8 angeordnet. Somit stellt die erste mittlere Schicht 3 eine Elektroden-tragende Schicht dar. Insbesondere sind die Elektroden 7, 8 zwischen den zwei mittleren Schichten 3, 4 angeordnet. Die Elektroden 7, 8 erstrecken sich von einem Rand zum gegenüberliegenden Rand der ersten mittleren Schicht 3 und sind von den anderen Rändern der Schicht 3 beabstandet. Die Elektroden 7, 8 können auch als ein vom Hohlraum 6 durchbrochener einzelner Streifen angesehen werden.

Die Elektroden 7, 8 grenzen an den Hohlraum 6 an. Insbesondere weisen die Elektroden 7, 8 jeweils Elektrodenenden 9, 10 auf, die am Hohlraum 6 angeordnet sind. Die Elektrodenenden 9, 10 sind insbesondere an gegenüberliegenden, den Hohlraum 6 seitlich begrenzenden Seitenwänden 11, 12 angeordnet. Die Elektrodenenden 9, 10 sind zur Erzeugung eines Lichtbogens bei Überschreiten einer Grenzspannung zwischen den Elektroden 7, 8 ausgebildet.

Beispielsweise weisen die Elektroden 7, 8 Kupfer und/oder Wolfram auf. Die Elektroden 7, 8 können auch abschnittsweise unterschiedliche Materialien aufweisen. Beispielsweise weisen die Elektrodenenden 9, 10 Wolfram auf und ein vom Hohlraum 6 entfernter Abschnitt der Elektroden 7, 8 ein anderes Material, z. B. Kupfer, auf.

Figur 1B zeigt eine Aufsicht auf einen Schnitt durch den Ableiter 1 aus Figur 1A an der mit A--A gekennzeichneten Position. Insbesondere ist hier die erste, den Hohlraum 6 begrenzende Seitenfläche 11 in der Aufsicht zu sehen. An der ersten Seitenfläche 11 ist das Elektrodenende 9 der ersten Elektrode 7 angeordnet. Das Elektrodenende 9 bildet somit einen Teil der ersten Seitenfläche 11. Eine Aufsicht auf die zweite Seitenfläche 12 entspricht der Aufsicht auf die erste Seitenfläche 11.

Die Elektrodenenden 9, 10 verlaufen jeweils als schmale Striche parallel zu den Schichtebenen und somit senkrecht zur Stapelrichtung. Durch diese Ausbildung der Elektrodenenden 9, 10 kommt es zu einer lokalen Feldüberhöhung und damit zu einem definierten Bereich der Zündung des Lichtbogens.

Die Elektrodenenden 9, 10 sind vollständig zwischen den mittleren Schichten 3, 4 angeordnet und stehen somit nicht über die Schichten 3, 4 über. Die Seitenwand 11 ist somit abgesehen von der Position der Elektrodenenden 9, 10 vollständig vom Material der ersten und zweiten mittleren Schicht 3, 4, gebildet. Die Elektrodenenden 9, 10 bilden insbesondere keine Bedeckung des Materials der ersten und zweiten mittleren Schicht 3, 4 innerhalb des Hohlraums 6.

Die Elektrodenenden 9, 10 sind auf halber Höhe H des Hohlraums 6 angeordnet. Die Höhenrichtung entspricht dabei der Stapelrichtung. Insbesondere sind die Elektrodenenden 9,

10 von den den Hohlraum 6 begrenzenden Boden- und Deckenflächen beabstandet. Insbesondere grenzen die Elektroden 7, 8 nicht an die obere oder untere Deckschicht 2, 5 an, die den Hohlraum 6 nach unten und oben begrenzen. Weiterhin ist die Breite b der Elektroden 7, 8 und entsprechend der Elektrodenenden 9, 10 kleiner als die Breite B des Hohlraums 6.

Somit grenzen die Elektrodenenden 9, 10 nicht an andere, den Hohlraum 6 begrenzende Flächen an und sind lediglich jeweils an einer einzigen Seitenfläche 11, 12 angeordnet. Dadurch kann sichergestellt werden, dass die freie Länge zwischen den Elektrodenenden 9, 10, d.h., die Länge des Weges durch den gasgefüllten Hohlraum 6, kürzer ist als ein Weg zwischen den Elektrodenenden 9, 10 entlang des Materials der Schichten 2, 3, 4, 5. Somit wird sichergestellt, dass bei Erreichen einer Zündspannung eine definierte Gasentladung zwischen den Elektrodenenden 9, 10, insbesondere ein Lichtbogen, erzeugt wird.

Die Elektroden 7, 8 sind vorzugsweise mit Weiterkontaktierungen verbunden (nicht abgebildet). Die Weiterkontaktierungen können als Kappen auf gegenüberliegenden Seiten des Ableiters 1 ausgebildet sein, insbesondere als Kappen auf den Schmalseiten des Ableiters 1. Vorzugsweise ist der Ableiter 1 als SMD-Bauelement, d.h., als oberflächenmontierbares Bauelement, ausgebildet. Der Ableiter 1 ist beispielsweise zur Montage auf einer Leiterplatte ausgebildet.

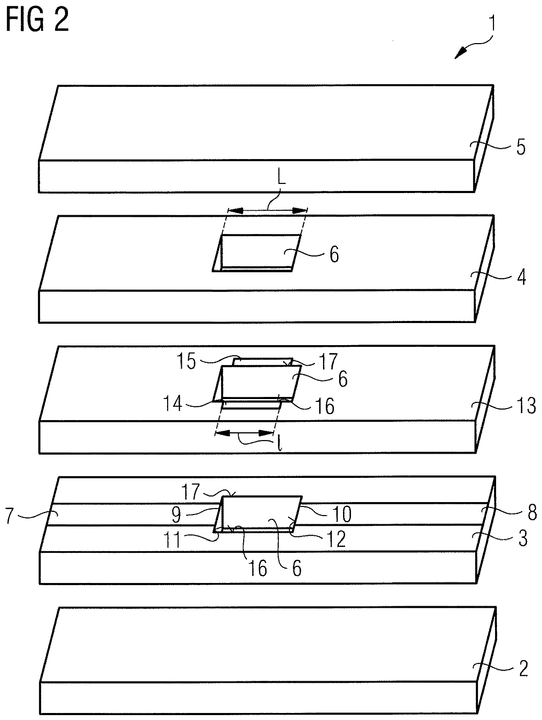

Figur 2 zeigt eine anspruchsgemäße Ausführungsform eines Ableiters 1 in einer Explosionsansicht.

Im Unterschied zu dem in den Figuren 1A und 1B gezeigten Ableiter 1 weist der hier gezeigte Ableiter 1 zusätzlich zwei Hilfselektroden 14, 15 auf. Die Hilfselektroden 14, 15 sind auf einer weiteren mittleren Schicht 13, insbesondere einer dritten mittleren Schicht 13 angeordnet. In weiteren Ausführungsformen kann der Ableiter 1 auch nur eine Hilfselektrode oder mehr als zwei Hilfselektroden aufweisen. Die weitere mittlere Schicht 13 ist zwischen der ersten Elektroden-tragenden mittleren Schicht 3 und der zweiten mittleren Schicht 4 angeordnet. Somit sind die Hilfselektroden 14, 15 höhenversetzt zu den Elektroden 8, 9 ausgebildet.

In einer alternativen, nicht-anspruchsgemäßen Ausführungsform können die Hilfselektroden 14, 15 auch auf der gleichen Schicht 3 wie die Elektroden 7, 8 angeordnet sein. In einer weiteren alternativen Ausführungsform kann die weitere mittlere Schicht 13 auch zwischen der unteren Deckschicht 2 und der Elektroden-tragenden mittleren Schicht 3 angeordnet sein.

Die weitere mittlere Schicht 13 kann wie die anderen Schichten 2, 3, 4, 5 aus einer Vielzahl von Folien gebildet sein. Der Hohlraum 6 führt auch durch die weitere mittlere Schicht 13 hindurch.

Die Hilfselektroden 14, 15 sind an gegenüberliegenden, den Hohlraum 6 begrenzenden Seitenflächen 16, 17 angeordnet. Die Hilfselektroden 14, 15 sind an anderen Seitenflächen 16, 17 angeordnet als die Elektrodenenden 9, 10. Die Hilfselektroden 14, 15 grenzen nicht an die Elektroden 7, 8 an. Die Länge 1 der Hilfselektroden 14, 15 ist kleiner als die Länge L des Hohlraums 6.

Die Hilfselektroden 14, 15 fungieren als Zündhilfe bei der Ausbildung der Gasentladung zwischen den Elektroden 7, 8. Die Hilfselektroden 14, 15 weisen vorzugsweise ein anderes Material auf als die Elektroden 7, 8. Beispielsweise weisen die Hilfselektroden 14, 15 Graphit oder Kohlenstoff auf.

Die Hilfselektroden 14, 15 sind jeweils als schmaler Streifen angrenzend an die weiteren Seitenflächen 16, 17 ausgebildet. Bei einer Aufsicht auf die weiteren Seitenflächen 16, 17 sind die Hilfselektroden 14, 15 als schmale Striche parallel zur Ebene der Schichten zu sehen.

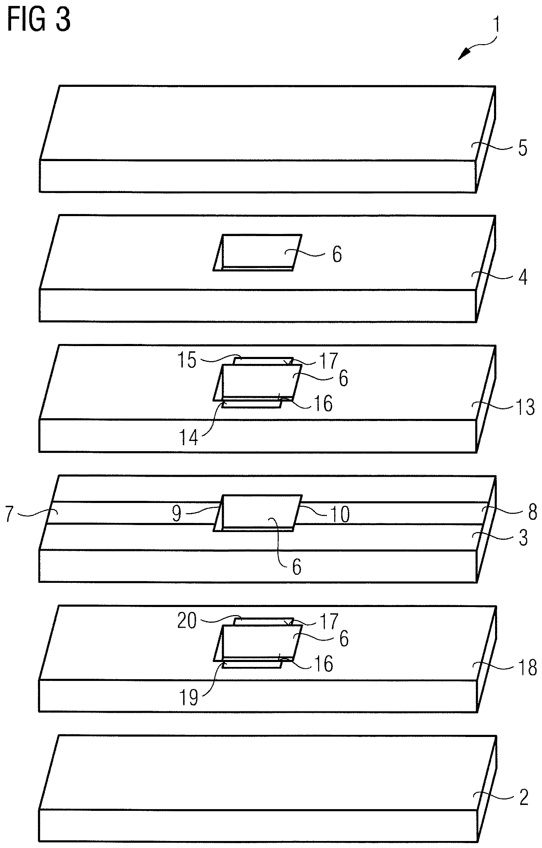

Figur 3 zeigt eine weitere anspruchsgemäße Ausführungsform eines Ableiters 1 in einer Explosionsansicht.

Im Unterschied zu dem Ableiter 1 aus Figur 2 weist der Ableiter 1 nochmals eine weitere mittlere Schicht 18 auf, insbesondere eine vierte mittlere Schicht 18. Die vierte mittlere Schicht 18 ist zwischen der ersten unteren Deckschicht 2 und der Elektroden-tragenden Schicht 3 angeordnet. Die vierte mittlere Schicht 18 ist wie die dritte mittlere Schicht 13 ausgebildet. Insbesondere verläuft der Hohlraum 6 durch die vierte mittlere Schicht 18 hindurch und es sind weitere, dritte und vierte Hilfselektroden 19, 20 auf der vierten mittleren Schicht 18 angeordnet.

Die dritten und vierten Hilfselektroden 19, 20 sind unterhalb der Ebene der Elektroden 7, 8 angeordnet, während die ersten und zweiten Hilfselektroden 14, 15 oberhalb der Ebene der Elektroden 7, 8 angeordnet sind. Die dritten und vierten Hilfselektroden 19, 20 sind an den gleichen Seitenflächen 16, 17 wie die ersten und zweiten Hilfselektroden 14, 15 angeordnet.

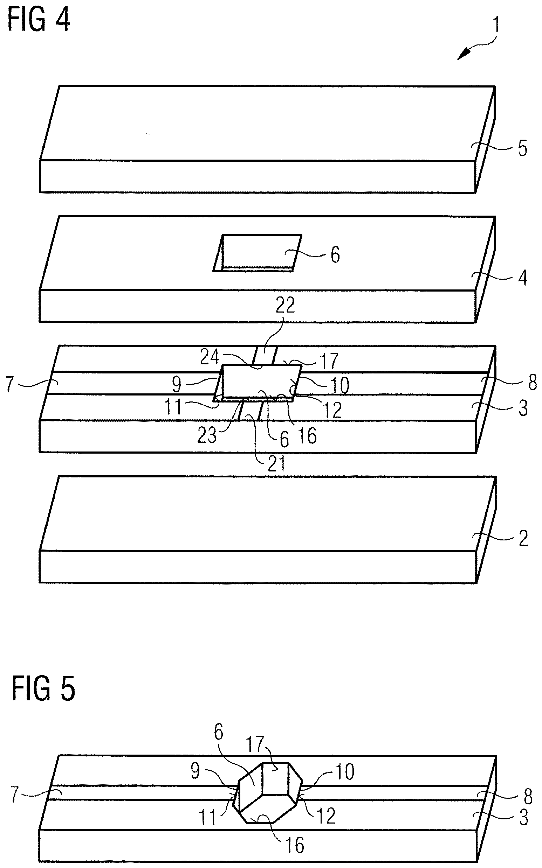

Figur 4 zeigt einen Teilaspekt einer Ausführungsform eines Ableiters 1 in einer Explosionsansicht. Es handelt sich hierbei um eine anspruchsgemäße Ausführungsform sofern Hilfselektroden vorhanden sind, die auf einer anderen Schicht angeordnet sind als die Elektroden.

Im Unterschied zum Ableiter 1 aus Figur 1 sind hier zusätzlich zu den ersten und zweiten Elektroden 7, 8 noch zwei weitere Elektroden 21, 22, d.h., dritte und vierte Elektroden 21, 22 vorhanden. Die weiteren Elektroden 21, 22 weisen vorzugsweise das gleiche Material auf wie die ersten und zweiten Elektroden 7, 8. Die weiteren Elektroden 21, 22 sind auf derselben Schicht 3 angeordnet wie die ersten und zweiten Elektrode 7, 8.

Die dritten und vierten Elektroden 21, 22 weisen Elektrodenenden 23, 24 auf, die an anderen Seitenflächen 16, 17 als die Elektrodenenden 9, 10 der ersten und zweiten Elektroden 7, 8 angeordnet sind. Insbesondere bilden die Elektroden 7, 8, 21, 22 ein Kreuz, das in der Mitte vom Hohlraum 6 durchbrochen ist. Die Elektrodenenden 23, 24 der dritten und vierten Elektroden 21, 22 verlaufen wie die Elektrodenenden 9, 10 der ersten und zweiten Elektroden 7, 8 in einer Ebene parallel zu den Schichtebenen.

Die Elektroden 8, 9, 21, 22 können beispielsweise derart verschaltet sein, dass bei Überschreiten einer Grenzspannung eine Gasentladung von der ersten und/oder zweiten Elektrode 7, 8 zur dritten und/oder vierten Elektrode 21, 22 stattfindet. Beispielsweise liegen die erste und zweite Elektroden 7, 8 auf einem gemeinsamen Potential und die dritten und vierten Elektroden 21, 22 auf einem gemeinsamen Potential. Die Elektroden 7, 8, 21, 22 können aber auch alle auf unterschiedlichen Potentialen liegen.

In einer alternativen Ausführungsform sind die weiteren Elektroden 21, 22 auf einer anderen Schicht angeordnet als die ersten und zweiten Elektroden 7, 8.

Auch bei diesem Ableiter 1 können ein oder mehrere Hilfselektroden 14, 15, 19, 20 wie in den Ausführungsformen gemäß den Figuren 2 und 3 vorhanden sein.

Figur 5 zeigt einen weiteren Teilaspekt einer Ausführungsform eines Ableiters 1, wobei hier lediglich die erste, Elektroden-tragende mittlere Schicht 3 gezeigt ist. Es handelt sich hierbei um eine anspruchsgemäße Ausführungsform sofern Hilfselektroden vorhanden sind, die auf einer anderen Schicht angeordnet sind als die Elektroden. Der Hohlraum 6 weist hier eine nicht-rechteckige Grundfläche auf. Die Grundfläche ist in Form eines Vielecks mit mehr als vier Ecken ausgebildet. Insbesondere ist die Grundfläche in Form eines Achtecks ausgebildet. Das Vieleck ist dabei spiegelsymmetrisch bezüglich einer Ebene, die senkrecht zur Grundfläche, parallel zu den Elektrodenenden 9, 10 und mittig zwischen den Elektrodenenden 9, 10 hindurch verläuft. Weiterhin ist das Vieleck spiegelsymmetrisch bezüglich einer Ebene, die senkrecht zur Grundfläche, senkrecht zu den Elektrodenenden 9, 10 und durch die Mitte der Elektrodenenden 9, 10 hindurch verläuft. Vorzugsweise weisen alle Innenwinkel der Grundfläche Werte von kleiner gleich 180° auf.

Beispielsweise weist das Vieleck eine langgestreckte Form auf. Insbesondere weisen die Seitenflächen 11, 12 des Hohlraums 6, an denen die Elektrodenenden 9, 10 angeordnet sind, einen größeren Abstand zueinander auf als andere, gegenüberliegende Seitenflächen 16, 17. Beispielsweise ist der Durchmesser des Hohlraums 6 von einem Elektrodenende 9 zum gegenüberliegenden Elektrodenende 10 größer als senkrecht dazu. In einer alternativen Ausführungsform kann das Vieleck regelmäßig ausgebildet sein. Vorzugsweise ist auch hier die Breite der Elektrodenenden 9, 10 geringer als die Breite der Seitenflächen 11, 12, an denen die Elektrodenenden 9, 10 angeordnet sind.

Die in Figur 5 gezeigte Ausführungsform kann mit den in den Figuren 1A bis 4 gezeigten Ausführungsformen beliebig kombiniert werden. Beispielsweise können auch bei der in Figur 5 gezeigten Ausführungsform Hilfselektroden vorhanden sein.

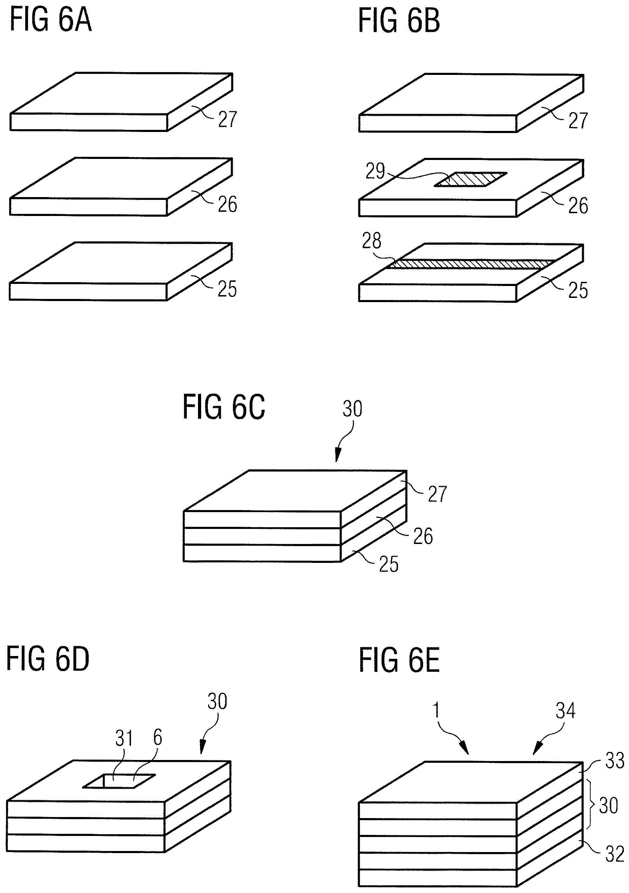

Die Figuren 6A-6E zeigen anspruchsgemäße Verfahrensschritte bei der Herstellung eines Ableiters, beispielhaft des Ableiters 1 gemäß Figur 2.

In einem ersten Verfahrensschritt 6A werden mindestens drei Folien 25, 26, 27 zur Ausbildung der drei mittleren Schichten 2, 3, 4 des Ableiters 1 bereitgestellt. Die Folien 25, 26, 27 sind beispielsweise als Grünfolien, insbesondere keramische Grünfolien ausgebildet. Die mittleren Schichten 2, 3, 4 können auch aus mehr als jeweils einer Folie gebildet sein. Beispielsweise werden für jede der mittleren Schichten 2, 3, 4 eine Vielzahl von Folien, z. B. 20 Folien bereitgestellt. Die Folien 25, 26, 27 weisen in diesem Verfahrensschritt noch keine Bedruckung und keine Löcher auf.

In einem weiteren Verfahrensschritt 6B wird auf die erste Folie 25, aus der die erste mittlere Schicht 3 gebildet wird, ein leitfähiges Material 28 zur Ausbildung der Elektroden 7, 8 aufgebracht. Beispielsweise wird das Material 28 in Form einer Elektrodenpaste, z. B. in einem Siebdruckverfahren, aufgebracht. Das Material 28 enthält oder besteht beispielsweise aus Kupfer und/oder Wolfram. Das Material 28 wird dabei als durchgehende Fläche, insbesondere als durchgehender Streifen, aufgebracht. Das Material reicht dabei von einem Rand der ersten Folie 25 bis zum gegenüberliegenden Rand der ersten Folie 25.

Auf die zweite Folie 26 wird ein weiteres Material 29 zur Ausbildung der Hilfselektroden 14, 15 aufgebracht. Das weitere Material 29 wird als durchgehende Fläche aufgebracht. Das Material 29 ist lediglich in einem zentralen Bereich auf der Folie 26 aufgebracht und reicht somit nicht bis zu einem Rand der Folie 26. Das weitere Material 29 ist beispielsweise Graphit oder enthält Graphit.

In einem weiteren Verfahrensschritt 6C werden die Folien 25, 26, 27 zu einem Teil-Folienstapel 30 übereinander gestapelt und laminiert.

In einem weiteren Verfahrensschritt 6D wird in den Teil-Folienstapel 30 ein Loch 31 zur Ausbildung des Hohlraums 6 eingebracht. Das Loch 31 führt dabei durch den gesamten Teil-Folienstapel 30 hindurch. Beispielsweise wird das Loch 31 durch Ausstanzen, z. B. durch mechanisches Ausstanzen oder durch Laserstanzen, hergestellt.

Durch die Ausbildung des Lochs 31 wird das aufgetragene Material 28 zur Ausbildung der Elektroden 8, 9 und das Material 29 zur Ausbildung der Hilfselektroden 14, 15 jeweils in zwei Teile getrennt.

In einem weiteren Verfahrensschritt 6E werden wenigstens zwei Deckfolien 32, 33 zur Ausbildung der unteren und der oberen Deckschicht 2, 5 bereitgestellt. Es können für die untere und obere Deckschicht 2, 5 auch jeweils mehrere Folien verwendet werden. Die Deckfolien 32, 33 sind vorzugsweise wie die Folien 25, 26, 27 zur Ausbildung der mittleren Schichten 3, 4, 5 ausgebildet. Insbesondere kann es sich um keramische Grünfolien handeln.

Der Teil-Folienstapel 30 wird zwischen der unteren Deckfolie 32 und der oberen Deckfolie 33 angeordnet, so dass ein Folienstapel 34 gebildet wird. Dabei wird das Loch 31 von unten und oben durch die Deckfolien 32, 33 abgedeckt, so dass ein Hohlraum 6 entsteht, der ganz im Inneren des nun gebildeten Folienstapels 34 liegt. Anschließend wird der Folienstapel 34 gesintert.

Vor oder nach dem Sintern können Weiterkontaktierungen zur elektrischen Kontaktierung der Elektroden 8, 9 ausgebildet werden. Beispielsweise werden die Weiterkontaktierungen als Kappen auf gegenüberliegenden Seiten des Folienstapels 34 aufgebracht.

Vorgehend wurde zur vereinfachten Darstellung die Herstellung der Schichten 2, 3, 4, 5 nur aus jeweils einer Folie 32, 25, 26, 27, 33 beschrieben. Eine Herstellung der Schichten aus jeweils mehreren Folien erfolgt analog. Beispielsweise können aus mehreren Folien schon vor der Ausbildung des Teil-Folienstapels 30 in Schritt 6C einzelne Folienpakete gebildet werden. Beispielsweise liegen in Schritt 6A oder 6B anstelle von einzelnen Folien 25, 26, 27 schon Folienpakete vor. Es können die Folien aber auch erst in Schritt 6C alle übereinander angeordnet werden, so dass bis dahin noch keine Folienpakete vorliegen. Weiterhin kann das Einbringen des Lochs 31 gemäß Schritt 6D auch bei einzelnen Folienpaketen durchgeführt werden, die erst anschließend übereinander gestapelt werden.

### Bezugszeichenliste

- 1: Ableiter
- 2: untere Deckschicht
- 3: erste mittlere Schicht
- 4: zweite mittlere Schicht
- 5: obere Deckschicht
- 6: Hohlraum
- 7: erste Elektrode
- 8: zweite Elektrode
- 9: Elektrodenende der ersten Elektrode
- 10: Elektrodenende der zweiten Elektrode
- 11: erste Seitenfläche
- 12: zweite Seitenfläche
- 13: dritte mittlere Schicht
- 14: erste Hilfselektrode
- 15: zweite Hilfselektrode
- 16: dritte Seitenfläche
- 17: vierte Seitenfläche
- 18: vierte mittlere Schicht
- 19: dritte Hilfselektrode
- 20: vierte Hilfselektrode
- 21: dritte Elektrode
- 22: vierte Elektrode
- 23: Elektrodenende der dritten Elektrode
- 24: Elektrodenende der vierten Elektrode
- 25: erste Folie
- 26: zweite Folie
- 27: dritte Folie
- 28: leitfähiges Material
- 29: weiteres Material
- 30: Teil-Folienstapel
- 31: Loch
- 32: untere Deckfolie
- 33: obere Deckfolie
- 34: Folienstapel

- b: Breite der Elektrode
- B: Breite des Hohlraums
- l: Länge der Hilfselektrode
- L: Länge des Hohlraums
- H: Höhe des Hohlraums

## Patentansprüche

1. Ableiter (1), aufweisend mehrere übereinander angeordnete, elektrisch isolierende Schichten (2, 3, 4, 5, 6, 13, 18) und einen Hohlraum (6), der durch mindestens zwei der Schichten (3, 4, 13, 18) führt, wobei zwischen diesen zwei Schichten (3, 4, 13, 18) Elektroden (7, 8, 21, 22) angeordnet sind, die an den Hohlraum (6) angrenzen,
wobei wenigstens eine Hilfselektrode (14, 15, 19, 20) zur Unterstützung einer Ausbildung eines Lichtbogens zwischen Elektrodenenden (9, 10, 23, 24) der Elektroden (7, 8, 21, 22) vorhanden ist,
wobei die Hilfselektrode (14, 15, 19, 20) an den Hohlraum (6) angrenzt und von den Elektroden (7, 8, 21, 22) beabstandet ist, **gekennzeichnet dadurch,**
**dass** die Hilfselektrode (14, 15, 19, 20) auf einer anderen der Schichten (2, 3, 4, 5, 6, 13, 18) angeordnet ist als die Elektroden (7, 8, 21, 22).

2. Ableiter nach Anspruch 1,
wobei die Schichten (2, 3, 4, 5, 6, 13, 18) eine untere Deckschicht (2) und eine obere Deckschicht (5) aufweisen, die den Hohlraum (6) nach unten und oben begrenzen, wobei die Elektroden (7, 8, 21, 22) von der unteren Deckschicht (2) und der oberen Deckschicht (5) beabstandet sind.

3. Ableiter nach einem der Ansprüche 1 oder 2,
wobei die Elektrodenenden (9, 10, 23, 24) parallel zur Ebene der Schichten (2, 3, 4, 5, 6, 13, 18) verlaufen.

4. Ableiter nach einem der Ansprüche 1 bis 3,
bei dem die Elektrodenenden (9, 10, 23, 24) auf halber Höhe (H) des Hohlraums (6) angeordnet sind.

5. Ableiter nach einem der Ansprüche 1 bis 4,
der wenigstens vier Elektroden (7, 8, 21, 22) aufweist, die jeweils bis zu einem äußeren Rand des Stapels der Schichten (3, 4, 13, 18) geführt sind.

6. Ableiter nach Anspruch 5,
bei dem die vier Elektroden (7, 8, 21, 22) in Form eines Kreuzes angeordnet sind, das vom Hohlraum (6) durchbrochen ist.

7. Ableiter nach einem der Ansprüche 1 bis 6,
bei dem der Hohlraum (6) eine rechteckige Grundfläche aufweist.

8. Ableiter nach einem der Ansprüche 1 bis 6,
bei dem der Hohlraum (6) eine achteckige Grundfläche aufweist.

9. Ableiter nach einem der Ansprüche 1 bis 8,
bei dem die Elektroden (7, 8, 21, 22) abschnittweise unterschiedliche Materialien aufweisen.

10. Ableiter nach Anspruch 9,
bei dem die Elektrodenenden (9, 10, 23, 24) Wolfram aufweisen und ein anderer Abschnitt der Elektroden (7, 8, 21, 22) Kupfer aufweist.

11. Verfahren zur Herstellung des Ableiters (1) nach einem der vorhergehenden Ansprüche, aufweisend die Schritte:
A) Bereitstellen wenigstens einer ersten Folie (25) und wenigstens einer zweiten Folie (26),
B) Aufbringen eines leitfähigen Materials (28) zur Ausbildung von Elektroden (7, 8) auf die erste Folie (25) und eines Materials (29) zur Ausbildung wenigstens einer Hilfselektrode (14, 15) auf die zweite Folie (26),
C) Übereinander Anordnen der ersten Folie (25) und der zweiten Folie (26) zu einem Teil-Folienstapel (30), so dass das Material (29) zur Ausbildung der Hilfselektrode (14, 15) beabstandet ist vom leitfähigen Material (28) zur Ausbildung der Elektroden (7, 8) und auf einer anderen Folie angeordnet ist als das leitfähige Material (28) zur Ausbildung der Elektroden (7, 8), und danach oder davor Einbringen eines Lochs (31) in die erste Folie (25) und die zweite Folie (26), wobei das Loch (31) in der ersten Folie (25) das leitfähige Material (28) durchbricht, danach
D) Bereitstellen wenigstens einer unteren Deckfolie (32) und einer oberen Deckfolie (33) und Anordnen der ersten Folie und der zweiten Folie (26) zwischen der unteren Deckfolie (32) und der oberen Deckfolie (33).

12. Verfahren nach Anspruch 11,
wobei bei der Bildung des Teil-Folienstapels (30) das leitfähige Material zwischen der ersten Folie (25) und der zweiten Folie (26) angeordnet wird.

## Claims

1. Arrester (1),
comprising a plurality of electrically insulating layers (2, 3, 4, 5, 6, 13, 18) arranged one above the other, and a cavity (6) extending through at least two of the layers (3, 4, 13, 18), wherein electrodes (7, 8, 21, 22) adjoining the cavity (6) are arranged between said two layers (3, 4, 13, 18), wherein at least one auxiliary electrode (14, 15, 19, 20) for supporting the formation of a light arc between electrode ends (9, 10, 23, 24) of the electrodes (7, 8, 21, 22) is present,
wherein the auxiliary electrode (14, 15, 19, 20) adjoins the cavity (6) and is spaced apart from the electrodes (7, 8, 21, 22), **characterized in that** the auxiliary electrode (14, 15, 19, 20) is arranged on a different one of the layers (2, 3, 4, 5, 6, 13, 18) than the electrodes (7, 8, 21, 22).

2. Arrester according to Claim 1,
wherein the layers (2, 3, 4, 5, 6, 13, 18) comprise a lower cover layer (2) and an upper cover layer (5), which delimit the cavity (6) toward the bottom and top, wherein the electrodes (7, 8, 21, 22) are spaced apart from the lower cover layer (2) and the upper cover layer (5).

3. Arrester according to either of Claims 1 and 2,
wherein the electrode ends (9, 10, 23, 24) extend parallel to the plane of the layers (2, 3, 4, 5, 6, 13, 18).

4. Arrester according to any of Claims 1 to 3,
wherein the electrode ends (9, 10, 23, 24) are arranged at half the height (H) of the cavity (6).

5. Arrester according to any of Claims 1 to 4,
which comprises at least four electrodes (7, 8, 21, 22) that are each led as far as an outer edge of the stack of the layers (3, 4, 13, 18).

6. Arrester according to Claim 5,
wherein the four electrodes (7, 8, 21, 22) are arranged in the form of a cross that is perforated by the cavity (6).

7. Arrester according to any of Claims 1 to 6,
wherein the cavity (6) has a rectangular basic area.

8. Arrester according to any of Claims 1 to 6,
wherein the cavity (6) has an octagonal basic area.

9. Arrester according to any of Claims 1 to 8,
wherein the electrodes (7, 8, 21, 22) comprise different materials in sections.

10. Arrester according to Claim 9,
wherein the electrode ends (9, 10, 23, 24) comprise tungsten and a different section of the electrodes (7, 8, 21, 22) comprises copper.

11. Method for manufacturing the arrester (1) according to any of the preceding claims, comprising the following steps:
A) providing at least one first film (25) and at least one second film (26),
B) applying a conductive material (28) for forming electrodes (7, 8) on the first film (25) and a material (29) for forming at least one auxiliary electrode (14, 15) on the second film (26),
C) arranging the first film (25) and the second film (26) one above the other to form a partial film stack (30), such that the material (29) for forming the auxiliary electrode (14, 15) is spaced apart from the conductive material (28) for forming the electrodes (7, 8) and is arranged on a film different than the conductive material (28) for forming the electrodes (7, 8), and, afterwards or beforehand, introducing a hole (31) into the first film (25) and the second film (26), wherein the hole (31) in the first film (25) perforates the conductive material (28), and then
D) providing at least one lower cover film (32) and one upper cover film (33) and arranging the first film and the second film (26) between the lower cover film (32) and the upper cover film (33).

12. Method according to Claim 11,
wherein the conductive material is arranged between the first film (25) and the second film (26) when forming the partial film stack (30).

## Revendications

1. Parafoudre (1), comportant une pluralité de couches électriquement isolantes (2, 3, 4, 5, 6, 13, 18) disposées les unes au-dessus des autres et une cavité (6) qui est formée par au moins deux des couches (3, 4, 13, 18), des électrodes (7, 8, 21, 22), qui sont adjacentes à la cavité (6), étant disposées entre ces deux couches (3, 4, 13, 18),
au moins une électrode auxiliaire (14, 15, 19, 20) étant prévue pour favoriser la formation d'un arc entre les extrémités (9, 10, 23, 24) des électrodes (7, 8, 21, 22),
l'électrode auxiliaire (14, 15, 19, 20) étant adjacente à la cavité (6) et étant espacée des électrodes (7, 8, 21, 22), **caractérisé en ce que** l'électrode auxiliaire (14, 15, 19, 20) est disposée sur une autre des couches (2, 3, 4, 5, 6, 13, 18) que celles des électrodes (7, 8, 21, 22).

2. Parafoudre selon la revendication 1,
les couches (2, 3, 4, 5, 6, 13, 18) comportant une couche de recouvrement inférieure (2) et une couche de recouvrement supérieure (5) qui délimitent la cavité. (6) vers le bas et vers le haut, les électrodes (7, 8, 21, 22) étant espacées de la couche de recouvrement inférieure (2) et de la couche de recouvrement supérieure (5).

3. Parafoudre selon l'une des revendications 1 et 2,
les extrémités d'électrode (9, 10, 23, 24) s'étendant parallèlement au plan des couches (2, 3, 4, 5, 6, 13, 18) .

4. Parafoudre selon l'une des revendications 1 à 3,
les extrémités d'électrode (9, 10, 23, 24) étant disposées à mi-hauteur (H) de la cavité (6).

5. Parafoudre selon l'une des revendications 1 à 4,
lequel comporte au moins quatre électrodes (7, 8, 21, 22), qui sont chacune dirigées vers un bord extérieur de l'empilement des couches (3, 4, 13, 18).

6. Parafoudre selon la revendication 5,
les quatre électrodes (7, 8, 21, 22) étant disposées sous la forme d'une croix ménagée par la cavité (6).

7. Parafoudre selon l'une des revendications 1 à 6,
la cavité (6) ayant une surface de base rectangulaire.

8. Parafoudre selon l'une des revendications 1 à 6,
la cavité (6) ayant une surface de base octogonale.

9. Parafoudre selon l'une des revendications 1 à 8,
les électrodes (7, 8, 21, 22) comportant par portions des matériaux différents.

10. Parafoudre selon la revendication 9,
les extrémités d'électrode (9, 10, 23, 24) comportant du tungstène et une autre portion des électrodes (7, 8, 21, 22) comportant du cuivre.

11. Procédé de réalisation du parafoudre (1) selon l'une des revendications précédentes, ledit procédé comprenant les étapes suivantes :
A) fournir au moins un premier film (25) et au moins un deuxième film (26),
B) appliquer un matériau conducteur (28) pour former des électrodes (7, 8) sur le premier film (25) et un matériau (29) pour former au moins une électrode auxiliaire (14, 15) sur le deuxième film (26),
C) disposer le premier film (25) et le deuxième film (26) l'un au-dessus de l'autre pour former un empilement de films partiel (30) de sorte que le matériau (29) destiné à former l'électrode auxiliaire (14, 15) soit espacé du matériau conducteur (28) destiné à former les électrodes (7, 8) et soit disposé sur un autre film que celui du matériau conducteur (28) destiné à former les électrodes (7, 8) et, ensuite ou avant, ménager un trou (31) dans le premier film (25) et le deuxième film (26), le trou (31) ménagé dans le premier film (25) transperçant le matériau conducteur (28), puis
D) fournir au moins un film de recouvrement inférieur (32) et un film de recouvrement supérieur (33) et disposer le premier film et le deuxième film (26) entre le film de recouvrement inférieur (32) et le film de recouvrement supérieur (33).

12. Procédé selon la revendication 11,
le matériau conducteur étant disposé entre le premier film (25) et le deuxième film (26) pendant la formation de l'empilement de films partiel (30).
